# EUROPÄISCHE PATENTSCHRIFT

(11) **EP 0 678 711 B1**
(45) Veröffentlichungstag und Bekanntmachung des Hinweises auf die Patenterteilung: **08.09.1999**
(21) Anmeldenummer: 95105836.1
(22) Anmeldetag: 19.04.1995
(51) Int. Cl.: F24D 11/00, F28D 20/00

(54) **Speicher für einen Heizkreislauf**
Accumulator for heating circuit
Accumulateur pour circuit de chauffage

(30) Priorität: 19.04.1994 DE 4413629
(43) Veröffentlichungstag der Anmeldung: 25.10.1995
(73) Patentinhaber: ELCO KLÖCKNER HEIZTECHNIK GmbH, 72379 Hechingen (DE)
(72) Erfinder: Poppel, Rolf, D-72379 Hechingen (DE)
(74) Vertreter: Turi, Michael, Dipl.-Phys.

(56) Entgegenhaltungen:
- EP-A- 0 584 393
- DE-A- 1 910 088
- FR-A- 2 095 739
- US-A- 2 642 851

## Beschreibung

Die Erfindung befaßt sich mit einem Baukasten für den Zusammenbau eines Speichers samt Isolierung und Verkleidung für einen Heizkreislauf, nach dem Oberbegriff von Anspruch 1.

Derartige Speicher werden z.B. in privaten Haushalten zur Aufbereitung und Speicherung von Warm- bzw. Brauchwasser eingesetzt. Für die industrielle Anwendung derartiger Speicher kommen als Speichermedium neben Wasser auch Nieder- bzw. Hochdruckdampf sowie organische Flüssigkeiten in Betracht.

Das im Speicher gespeicherte Speichermedium wird über einen Wärmetauscher erwärmt, der seinerseits vom Heizkreislauf mit einem Wärmeträgermedium - vorzugsweise mit Warmwasser - gespeist wird. Dabei spielt es im allgemeinen keine Rolle, ob der Heizkreislauf Gas-, Öl-, Holz- und/oder Sonnenwärme ausnutzt, um das Wärmeträgermedium zu erwärmen.

Nach dem Stand der Technik bilden derartige Speicher meist eine integrale Einheit bestehend im wesentlichen aus einem Speicherbehälter zur Aufnahme des Speichermediums, der mit einer Wärmetauscherschlange zur Wärmeübertragung an das Speichermedium und zur Kopplung an den Heizkreislauf ausgestattet ist. Der Speicherbehälter ist allseitig von einem Isoliermantel - vorzugsweise aus PUR (Polyurethan) Hartschaum - und von einer äußeren Verkleidung umgeben, derart, daß Verkleidung, Isolierung und Speicherbehälter eine zusammenhängende Einheit nach Art eines dreischichtigen Verbundwerkstoffes ausbilden. Eine derartige Bauweise bekannter Speicher läßt sich fertigungstechnisch dadurch realisieren, daß der zuvor erwähnte PUR-Hartschaum zwischen der Außenwand des Speicherbehälters und der Innenwand der Verkleidung ein- bzw. aufgeschäumt wird und nach Erhärtung einen festen Verbund mit Speicherbehälter und Verkleidung eingeht. Im Ergebnis ist dann der Speicherbehälter im PUR-Hartschaum eingebettet.

Je nach Anforderungen an den Speicher bezüglich Speicherkapazität, Außenabmessung etc. werden derartige Speicher in verschiedenen Behältergrößen und Geometrien angeboten. Im allgemeinen sind sog. Tief- bzw. Liegespeicher bis 500 l, Standspeicher bis zu 1.000 l und Pufferspeicher bis 1000 l Fassungsvermögen erhältlich. Ändern sich die Anforderungen an den Speicher, z.B. bei industrieller Nutzung in Erweiterung des Heizkreislaufes, so muß ein Speicher durch einen anderen Speicher mit ggf. größerem Fassungsvermögen ersetzt werden. Für unterschiedliche Anforderungen an den Speicher bezüglich Speicherkapazität, Außenabmessung, etc. sind demnach unterschiedliche Speicher erforderlich.

Neben der breiten Palette an Speichertypen, die von Speicherherstellern demnach angeboten werden müssen, erweist sich die zuvor beschriebenen Verbundkonstruktion bekannter Speicher als ungünstig für die Handhabung bei Transport und Lagerung. Im übrigen müssen derartige Speicher mühsam in Einzelteile zerlegt werden, um für die Zuführung in einen Wiederverwertungskreislauf geeignet zu sein.

Zwar wurden Speicher vorgeschlagen, deren Einzelteile leichter voneinander trennbar sind, um diese dann getrennt einem Wiederverwertungskreislauf zuzuführen. Aufgrund der Vielzahl an Speichertypen, die für unterschiedliche Anforderungen an den Speicher notwendig sind, bleibt der Aufwand an Logistik bei Herstellung, Transport und/oder Entsorgung trotzdem noch erheblich.

Ferner ist aus der FR-A 2 095 739 im Prinzip eine modulare Bauweise eines Warmwasserspeichers der eingangs genannten Art bekannt. Dabei sind z.B. drei zylinderförmige Speicherbehälter auf deren Mantelseite übereinander gestapelt und jeweils von einer quaderförmigen isolierenden Hülle umgeben. Außen sind diese Speicherbodule jeweils noch mit Isolationsplatten abgedeckt. Für die Verbindung der Isolationsbausteine untereinander sowie mit anderen Speicherbodulen sind jedoch keine besonderen Maßnahmen vorgesehen, insbesondere nicht zur Verhinderung von Wärmeverlusten an den Verbindungsstellen der Module. Außerdem sieht der bekannte Warmwasserspeicher keinerlei Bedienmöglichkeiten vor, welche im modularen Verbund einsetzbar sind.

Ferner offenbart die DE-A 1 910 088 einen Speicherkessel einer Elektro-Warmwasserheizung, der aus mehreren "kleinen" nebeneinander angeordneten Speicherbehältern aufgebaut ist, die über Verbindungsleitungen strömungsmäßig in Reihe miteinander verbunden sind. Weder sind hier jedoch die einzelnen Speicherbehälter für eine modulare Bauweise ausgelegt, noch sind weitere Module vorgesehen, die für einen modularen Aufbau der Isolierung und/oder der Verkleidung eines Speicherkessels notwendig sind.

Daher zielt die Erfindung darauf ab, eine flexiblere Bauvariante eines Speichers samt Isolierung und Verkleidung mit guten Isolationseigenschaften für einen Heizkreislauf zu schaffen.

Dieses Ziel wird durch den Gegenstand des Anspruches 1 erreicht. Weitere Ausführungen der Erfindung sind in den abhängigen Ansprüchen beschreiben.

Danach ist ein erfindungsgemäßer Speicher für einen Heizkreislauf nach dem sog. Modulbau- bzw. Baukastenprinzip mit folgenden Grundmodulen bzw. Modularten aufgebaut: Behältermodule; das Behältermodul wenigstens teilweise umgebende Isolationsmodule samt Verkleidung; und Bedien- bzw. Informationsmodule. Dabei sind sämtliche der vorgenannten Grundmodule derart ausgebildet, daß der Speicher bezüglich seiner spezifischen Parameter, wie Speicherkapazität, Wärmedämmung insbesondere gegenüber Abstrahlverlusten, Warmwasserleistung, Außenabmessung etc. beliebig veränderbar ist. Das heißt, der erfindungsgemäße Speicher weist im wesentlichen drei Modularten auf, wobei je nach Anforderung an den Speicher nach dem Baukastenprinzip jedes Modul beliebig mit weiteren Modulen bzw. Bausteinen derselben Modulart erweitert werden kann, um die erwünschte Speicherlösung zu realisieren. Um die Isolationseigenschaften des Speichers zu verbessern, sind zwischen den Behältermodulen und den Isolationsmodulen und/oder an den Verbindungsstellen zwischen den einzelnen Isolationsmodulen Dichtlippen, insbesondere aus EPS vorgesehen. Derartige Dichtlippen sind erfindungsgemäß mit einem höheren Luftanteil geschäumt als die Isolationsmodule selber, so daß sie ein Weichschaumteil ausbilden, das sich formmäßig beliebig zum Abdichten einpassen läßt.

Die zuvor genannten Grundmodule des erfindungsgemäßen Speichers sind von vorneherein lösbar miteinander verbunden. Dies erleichtert die stoffliche Trennung für die Entsorgung und Wiederverwendung der Einzelteile und verbessert im übrigen auch das Handling bei Transport und Lagerung gegenüber bekannten Speicherkonstruktionen. Die verschiedenen Grundmodule, die für die erwünschte Speicherlösung erforderlich sind, können beispielsweise getrennt als separate Einheit gelagert, zur Montage transportiert und erst am Einsatzort per Hand mühelos zusammengebaut werden. Diesen Vorgang erleichtern im übrigen die eindeutig gekennzeichneten und leicht montierbaren Grundmodule.

Der erfindungsgemäße Speicher zeichnt sich auch durch seine Service-Freundlichkeit aus. Alle Speicherkomponenten sind durch einfache Montage der lösbaren Grundmodule leicht zugänglich und können bei Ausfall einzeln ausgetauscht werden.

Im Ergebnis bringt die Modulbauweise des erfindungsgemäßen Speichers, insbesondere die fast unbegrenzte Kombinationsmöglichkeit der Grundmodule zur gewünschten Speicherlösung eine erhebliche Reduzierung des Logistikaufwandes bei Herstellung, Transport und Lagerung, sowie Service und Wiederverwertung.

Bevorzugt ist auch ein Boden- bzw. Standmodul und/oder ein Abdeckmodul, insbesondere aus einem Isolationsmaterial, im Baukasten des erfindungsgemäßen Speichers vorgesehen (Anspruch 2). Neben der stabilen Lagerung eines Speichers - insbesondere wenn sich der Speicher vom Boden bis zur Decke eines Kellerraumes erstreckt - können auf diese Weise Abstrahlverluste durch Standfüße bzw. Deckenabschlüsse verringert werden.

Ferner ist vorzugsweise ein weiteres Isolationsmodul vorgesehen, welches das og. Bedienmodul umgibt (Anspruch 3). Durch komplette Isolation bzw. Kapselung der Instrumente und Bedienvorrichtungen am Bedienmodul werden Wärmebrücken vermieden und daher Abstrahlverluste weiter verringert. Einfache Schnapp- und/oder Steckverbindungen sorgen für eine leichte und schnelle Montage der zusätzlichen Isolationsmodule an den Bedienmodulen, sodaß die letzteren ohne weiteres zugänglich sind.

Bevorzugt ist der erfindungsgemäße Speicherbaukasten ferner mit einem Anschlußmodul für den Anschluß an den Heizkreislauf ausgestattet (Anspruch 4). Vorgefertigte Flanschanschlüsse ermöglichen den Anschluß und die Durchführung eines Rohrsystems des Heizkreislaufes sowie ggf. den Anschluß für weitere Heizkomponenten z.B. für eine Wärmepumpe, eine Elektroheizung und/oder einem Solar-Wärmetauscher.

Bei einem bevorzugten Ausführungsbeispiel des erfindungsgemäßen Speichers sind die Behältermodule über abdichtende Verbindungen, wie beispielsweise Schraub- und/oder Steckverbindungen, miteinander verbindbar, insbesondere aufeinander stapelbar (Anspruch 5). Je nach erforderlichem Speicherinhalt können mehrere Behälter übereinander besonders platzsparend angeordnet werden. Die genannten Schraub- und/oder Steckverbindungen sorgen für eine leichte und schnelle Montage und für die Kommunikation zwischen den Behältern.

Um eine gute Korrosionsbeständigkeit zu garantieren sind die Behältermodule des erfindungsgemäßen Speichers aus emailiertem Stahlblech gefertigt und mit einer Korrosionsschutzvorrichtung, insbesondere einer Magnesium- und/oder Fremdstromanode, versehen (Anspruch 6 und 7). Besonders vorteilhaft gewährleistet eine zweifache Vakuum-Emaillierung der Behälterinnenflächen und der zusätzliche Korrosionsschutz mit Magnesiumanode bzw. Fremdstromanode die Langlebigkeit des Speichers. Im übrigen sind derartige Behältermodule ohne weiteres einem Wiederverwertungskreislauf zugänglich. Z.B. kann der Stahlblechbehälter eingeschmolzen und zu Industriestahl verarbeitet werden, wobei das Emaill einfach als Schlacke ausgeschieden wird.

Aus ergonomischen Gründen ist das Behältermodul vorzugsweise kugel-, zylinder- oder quaderförmig ausgebildet und das Isolationsmodul mit Verkleidung der Formgebung des Behältermoduls sowie den räumlichen Verhältnissen entsprechend angepaßt, derart, daß der Speicher insgesamt einen polygonalen- und/oder gekrümmten Grundriss aufweist. Auf diese Weise ist der erfindungsgemäße Speicher sowohl bezüglich Speicherinhalt als auch bezüglich den Platzverhältnissen im Lager bzw. Kellerraum anpaßbar. Dem Erfordernis einer möglichst effektiven Raumausnutzung kommt insbesondere ein Speicher nach, der mehrere aufeinander gestapelte zylinderförmige Behältermodule aufweist, denen jeweils ein Isolationsmodul einschließlich Verkleidung mit vierteloder halbkreisförmigem Querschnitt zugeordnet ist (Anspruch 9). Ein derartiger Speicher kann beispielsweise direkt an Kellerwände, z.B. in Form eines Halbzylinders, angebaut oder in Kellerecken als Viertelzylinder integriert sein.

Die Montage und Handhabbarkeit des Isolationsmoduls wird dadurch verbessert, daß dieses aus - der Form des zugehörigen Behältermoduls angepaßten - mehrteiligen Isolationsschalen aufgebaut ist (Anspruch 10). Beispielsweise können auch hier Schnapp- und/oder Steckverbindungen für eine leichte und schnelle Montage bzw. Demontage der einzelnen Isolationsschalen sorgen.

Vorzugsweise sind die Isolationsschalen aus extrudiertem Polystyrol (EPS) gefertigt (Anspruch 11). EPS zeichnet sich durch sein geringes Gewicht, seinem minimalen Volumen bei maximaler Druck- und Biegefestigkeit und vor allem durch seine guten Wärmedämmeigenschaften aus. Im übrigen kann EPS besonders einfach durch mechanische Verkleinerung und erneute Ausbildung von Formteilen ohne Schadstoffemission wiederverwertet werden.

Damit auch die Verkleidung ohne aufwendiges mechanisches Zerlegen einem Wiederverwertungsprozeß zugeführt werden kann, können beim erfindungsgemäßen Speicherbaukasten zusätzlich von den Isolationsmodulen lösbare Verkleidungsmodule vorgesehen sein. Besonders einfach und schnell sind die Verkleidungsmodule über Schnapp- und/oder Steckverbindungen miteinander verbindbar. Vorzugsweise sind dazu die Verkleinerungsmodule dünnwandig und flexibel ausgebildet, derart, daß diese auf das zugeordnete Isolationsmodul aufschiebbar sind, um das Handling besonders einfach zu gestalten. Die Verkleidungsmodule sind ferner aus Aluminiumblech oder Kunststoff, insbesondere aus Polypropylen (PP) gefertigt. Die Verkleidungsmodule werden dann zwecks Wiederverwertung eingeschmolzen bzw. zerkleinert und emissionsfrei für die Produktion neuer Verkleidungsmodule verwendet.

Die Recycling-Fähigkeit des hier vorgeschlagenen Speichers ist somit ohne erforderliche stoffliche Trennung zu 100 % schadstofffrei gewährleistet.

Beim bevorzugten Ausführungsbeispiel eines erfindungsgemäßen Speichers, der je nach Anforderung aus mehreren Speichermodulen auf- bzw. ausgebaut sein kann, ist ein einziges Bedienmodul für das Betreiben und Erfassen von mehreren Behältermodulen vorgesehen (Anspruch 16). Dabei können sämtliche elektrischen Leitungen, z.B. für eine Elektroheizung oder eine Fremdstromanode an den einzelnen Speicherbehältern, innerhalb des Bedienmoduls integriert sein, sodaß keine elektrischen Leitungen von außen sichtbar sind.

Vorzugsweise ist das Bedienmodul mit einer Temperaturanzeige, einem Thermostat, einer Zeitschaltung, einer Fremdstromanodenvorrichtung und/oder einer Elektroheizung ausgestattet (Anspruch 17).

Weitere Vorteile und Ausgestaltungen der Erfindung ergeben sich aus der nachfolgenden Beschreibung bevorzugter Ausführungsbeispiele. Darin wird auf die beigefügte schematische Zeichnung Bezug genommen.

In der Zeichnung zeigen:
- Fig. 1: ein erstes Ausführungsbeispiel eines erfindungsgemäßen Speichers mit den drei Grundmodulen: Behältermodul, Isolationsmodul und Bedien- bzw. Informationsmodul in perspektivischer Darstellung;
- Fig. 2 a,b: ein zweites Ausführungsbeispiel eines erfindungsgemäßen Speichers;
- Fig. 3 a,b,c: ein drittes Ausführungsbeispiel eines erfindungsgemäßen Speichers mit drei übereinandergestapelten Behältermodulen;
- Fig. 4 a,b: ein viertes Ausführungsbeispiel eines erfindungsgemäßen Speichers mit übereinandergestapelten Isolationsmodulen;
- Fig. 5: ein fünftes Ausführungsbeispiel eines erfindungsgemäßen Speichers mit einem Anschlußmodul zur Kopplung an einen Heizkreislauf;
- Fig. 6: ein sechstes Ausführungsbeispiel eines erfindungsgemäßen Speichers; und
- Fig. 7: ein siebtes Ausführungsbeispiel eines erfindungsgemäßen Speichers mit isoliertem Bedienmodul.

Anhand dieser Figuren soll die Modulbauweise des erfindungsgemäßen Speichers für einen Heizkreislauf veranschaulicht werden. Dieselben Konstruktionselemente sind in den Figuren mit denselben Bezugszeichen gekennzeichnet.

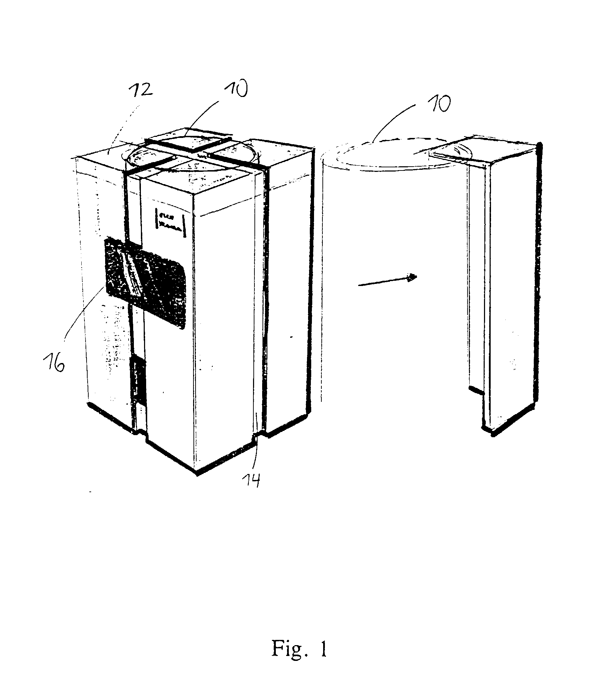

In Fig. 1 sind die drei wesentlichen Grundmodule des dem erfindungsgemäßen Speicher zugrunde liegenden Baukastens dargestellt: ein zylinderförmiges Behältermodul 10 (in der Zeichnung lediglich schematisch angedeutet), insbesondere zur Warmwasserbereitung und -speicherung; ein Isolationsmodul 12 mit äußerer Verkleidung bestehend aus vier Isolationsschalen mit rechteckigem Grundriß, welche über ein Steckverbindungsgerüst 14 an ihren Längsseiten und Querseiten derart miteinander verbunden sind, daß sie einen unmittelbar an das Behältermodul 10 anliegenden Isolationsquader ausbilden; und ein an einer Seitenfläche des Isolationsquaders angeordnetes Bedien- bzw. Informationsmodul 16, worauf sämtliche Instrumente zur Überwachung und Steuerung des Behältermoduls 10 angeordnet sind.

Elektrische Leitungen für die Versorgung des Bedienmoduls verlaufen innerhalb der Isolationsschalen. Von außen sind keine elektrischen Leitungen sichtbar.

Fig. 1 zeigt ferner eine einzelne vom Isolationsquader in Richtung des dargestellten Pfeiles abgelöste Isolationsschale, welche das (angedeutete) Behältermodul 10 seitlich umfaßt. Auf diese Weise ist das Isolationsmodul 12, bestehend aus den vier Isolationsschalen, einfach und schnell montiert bzw. demontiert - und kann ggf. ohne aufwendige stoffliche Trennung oder Ablösung vom Behältermodul 10 - wie es bei fest eingeschäumten Behältermodulen nach dem Stand der Technik erforderlich ist - einer Entsorgung oder Wiederverwertung zugeführt werden.

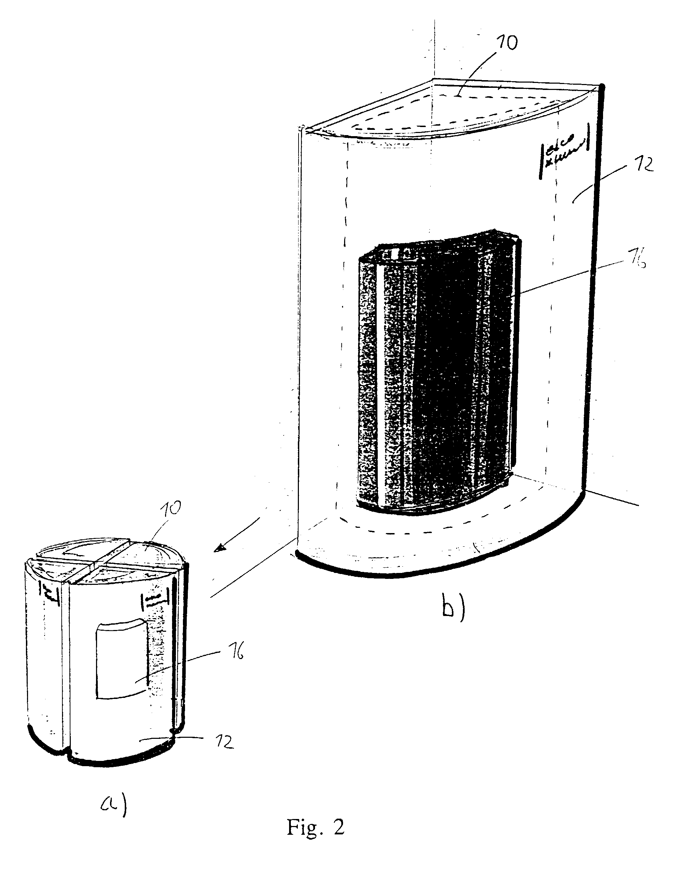

Auch die Figuren 2 a,b veranschaulichen das Baukastenprinzip, das der vorliegenden Erfindung zugrunde liegt.

Fig. 2b zeigt einen Einzelspeicher, der den räumlichen Verhältnissen angepaßt in einer Ecke eines Keller- oder Lagerraumes untergebracht ist. Der Einzelspeicher weist die für den erfindungsgemäßen Speicher typischen Grundmodule auf: ein Behältermodul 10 mit viertelkreisförmigem Grundriß; ein am Behältermodul 10 anliegendes Isolationsmodul 12 mit Verkleidung, und ein außen an der offenen Seitenfläche des Isolationsmoduls 12 befestigtes Bedienmodul 16. In Fig. 2b ist der Einzelspeicher von Fig. 2a mit drei weiteren identischen Einzelspeichern zu einem Speicher bzw. Mehrfachspeicher mit vierfachem Speichervolumen baukasten- bzw. modulartig zusammengefügt. Dabei sind vier gleichartige Einzelspeicher mit halbkreisförmigem Grundriß nebeneinander angeordnet und stehen über abgedichtete Schraubverbindungen zwischen den einzelnen Behältermodulen 10 und über Steckverbindungen zwischen den einzelnen Isolationsmodulen 12 miteinander in Verbindung. Auf diese Weise läßt sich der Einzelspeicher von Fig. 2a mit geringem Aufwand auf die vierfache Speicherkapazität erweitern, ohne ihn - wie im Stand der Technik üblich - durch einen neuen, größeren Speicher zu ersetzen. Im übrigen sind zwischen den Einzelspeichern Steckverbindungen vorgesehen, um das einzige Bedienmodul 16 ebenfalls mit den erweiterten Speichern zu koppeln.

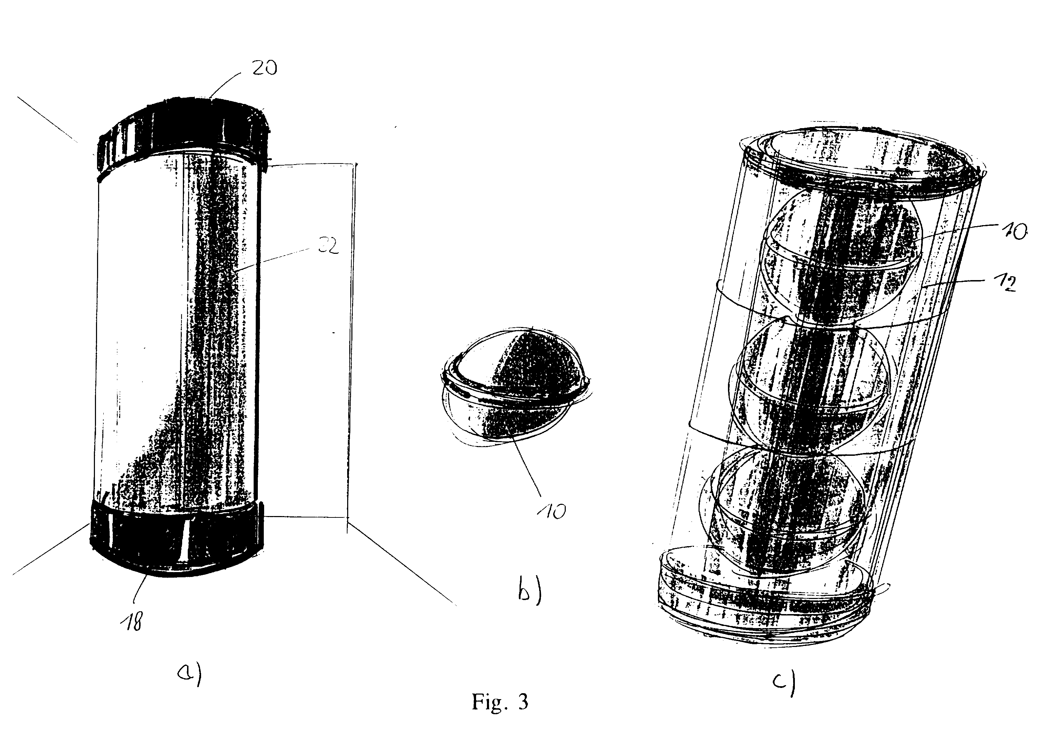

Die Figuren 3 a,b,c zeigen ein weiteres Ausführungsbeispiel für einen modulartig aufgebauten erfindungsgemäßen Speicher. Fig. 3b zeigt ein einzelnes Behältermodul 10, das mit zwei weiteren identischen Behältermodulen 10 in Fig. 3c zu einem Gesamtbehälter mit dreifachem Behältervolumen gestapelt ist. Den einzelnen Behältern 10 sind jeweils Isolationsmodule 12 - ebenfalls übereinander gestapelt - zugeordnet, welche mit kugelartiger Innenfläche und zylindrischer Außenfläche ausgebildet sind. Daher nimmt der Speicher insgesamt die Form eines Zylinders ein. In Fig. 3a ist derselbe Speicher ferner mit einem Boden- bzw. Standmodul 18 sowie einem Abdeckmodul 20 ausgestattet, sodaß sich der Speicher vom Boden bis zur Decke eines Keller- bzw. Lagerraumes erstreckt. Vorteilhaft sind Bodenmodul 18 und Dekkenmodul 20 aus einem Isoliermaterial gefertigt. Bodenmodul 18 und Abdeckmodul 20 sind auf den Isolationszylinder einfach an seinem oberen und unteren Ende aufschiebbar, was wiederum Montage bzw. Demontage erleichert.

Der Speicher in Fig. 3a ist umfänglich von einem - von den Isolationsmodulen 12 lösbaren - Verkleidungsmodul 22 (hier in der Form eines Zylindermantels) umgeben. Auch die Verkleidung des erfindungsgemäßen Speichers ist somit ohne mechanische Zerstörung oder zeitaufwendige Zerlegung des Speichers einfach ablösbar und ggf. einem Wiederverwertungskreislauf zuführbar.

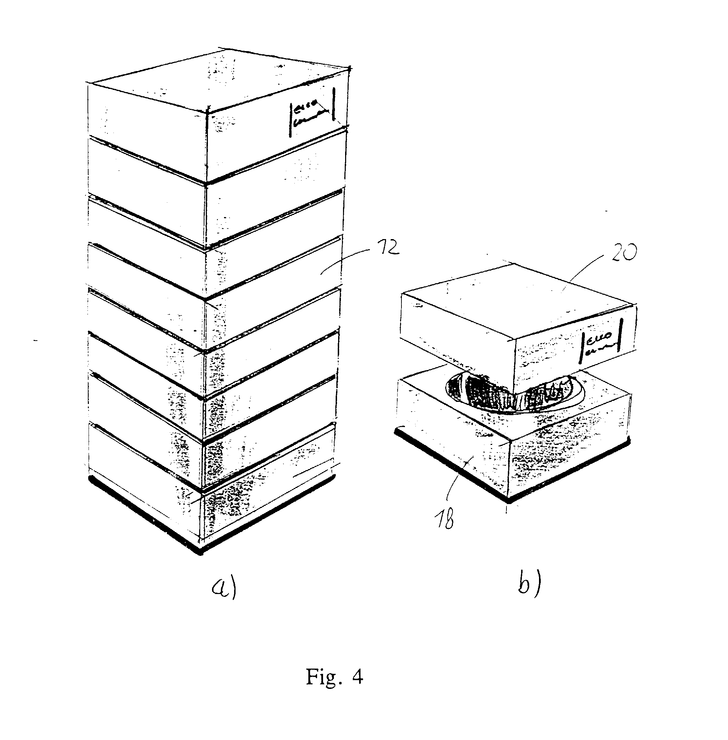

Die Fig. 4a, b zeigen eine weitere Variante für ein Isolationsmodul 12 einschließlich Verkleidung. Gemäß Fig. 4a sind die Isolationsmodule 12 mit rechteckigem Grundriß übereinander gestapelt und am oberen sowie unteren Ende des resultierenden Stapels mit den in Fig. 4b dargestellten Abdeck- bzw. Bodenmodulen 20, 18 abgeschlossen.

Fig. 4b läßt erkennen, daß die dort gezeigten Module 18, 20 mit kugelförmiger Innenfläche für die Kombination mit Behältermodulen 10 nach Fig. 3b vorgesehen sind. Je nach Anforderungen an die Speicherkapazität des Speichers können eine Anzahl von Speicherbehältern 10 nach Fig. 3b übereinander gestapelt und entsprechend viele Isolationsmodule 12 nach Fig. 4a übereinander angeordnet werden, um einen Speicher mit dem gewünschten Speichermodulen modulartig aufzubauen.

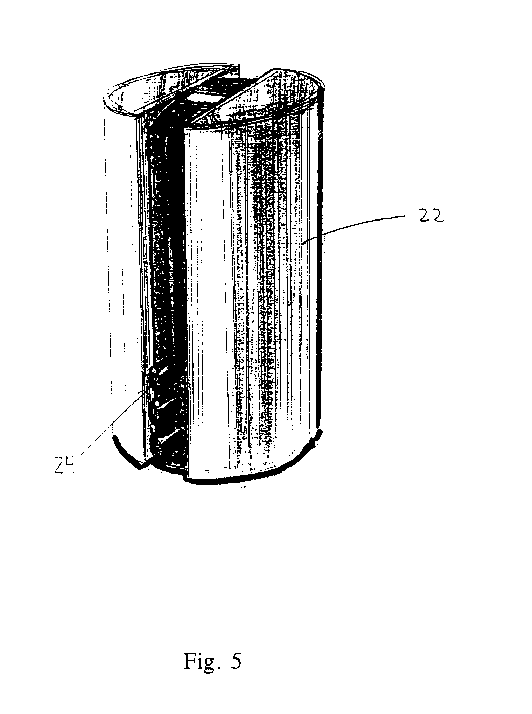

Fig. 5 zeigt ein weiteres Ausführungsbeispiel für einen Speicher nach der erfindungsgemäßen Modulbauweise. Neben den Grundmodulen - Behältermodul 10 und Isolationsmodul 12, die hier von einem Verkleidungsmodul 22 ummantelt sind - ist ferner ein Anschlußmodul 24 an der Frontseite des Speichers angeordnet. Die dort angeordneten vorgefertigten Flanschanschlüsse werden für den Anschluß an das Rohrsystem eines Heizkreislaufes genutzt sowie ggf. für den Anschluß beispielsweise einer Wärmepumpe oder eines Solar-Wärmetauschers.

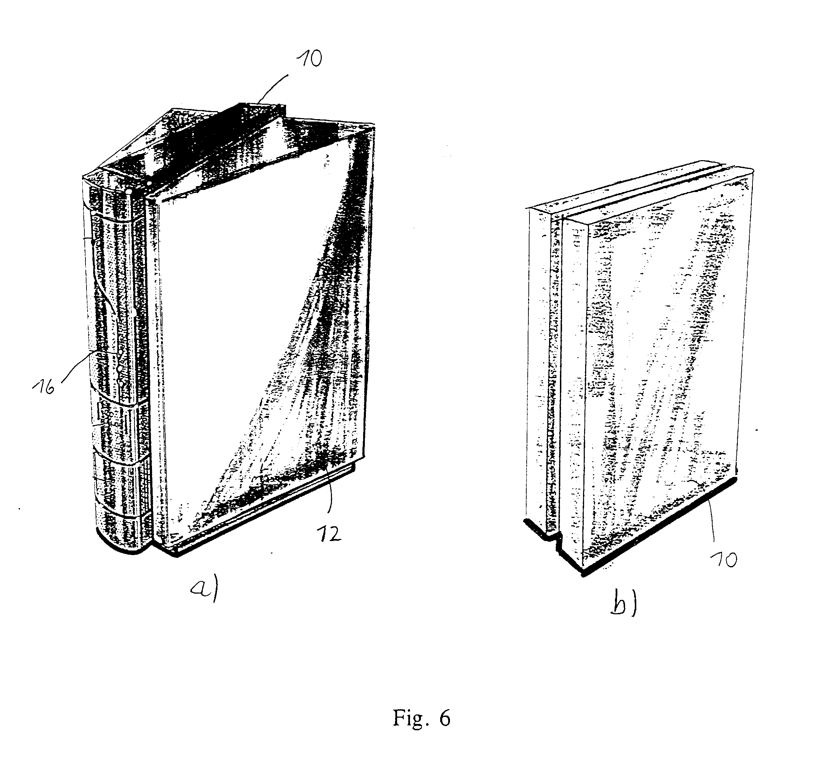

In Fig. 6a ist noch eine weitere Variante für einen erfindungegemäßen Speicher dargestellt. Dieser enthält ein plattenförmiges Behältermodul 10, das an seinen großen Seitenflächen von zwei anliegenden Isolationsmodulen 12 mit einem annähernd dreieckigem Grundriß umgeben ist. An einer kleinen Seitenfläche des Behältermoduls 10 ist ein Bedienmodul 16 angeordnet, das sich über die gesamte Seitenfläche des Behältermoduls erstreckt und auf dem z. B. Temperaturanzeige, Einfach- oder Doppelthermostat, Einbauzeitschaltuhr, etc. zur Steuerung und Überwachung des Speichers angeordnet sind. Fig. 6b zeigt eine Möglichkeit der Erweiterung des plattenartigen Behältermoduls 10 in Fig. 6a um ein weiteres gleichartiges Behältermodul 10. Hierdurch kann die Speicherkapazität des Speichers in Fig. 6a verdoppelt werden.

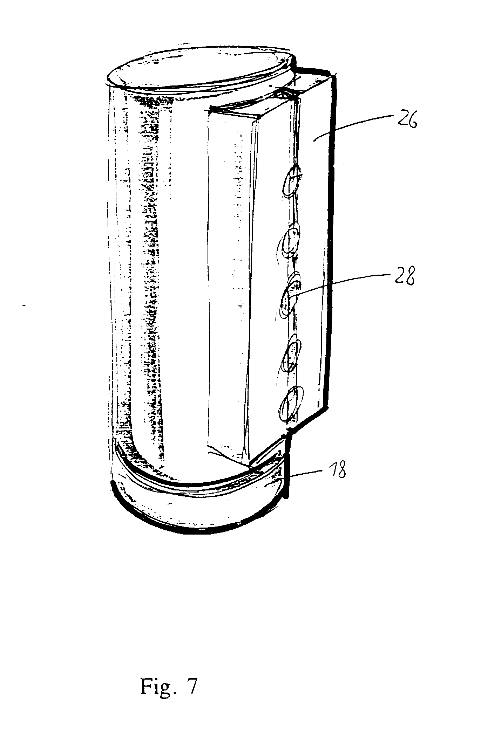

Schließlich zeigt Fig. 7 eine Variante eines erfindungsgemäßen Speichers, dessen Bedienmodul von einem kapselartigen weiteren Isolationsmodul 26 umgeben ist. Zusätzlich sind Isolationsblenden 28 vorgesehen, um ggf. den Blick auf Instrumente auf dem Bedienmodul 16 frei zu machen.

## Patentansprüche

1. Speicherbaukasten für den Zusammenbau samt Isolierung und Verkleidung für einen Heizkreislauf, mit folgenden Modulen:
- mehrere Behältermodule (10),
- mehrere die Behältermodule (10) jeweils wenigstens teilweise umgebende Isolationsmodule (12) samt Verkleidung,
gekennzeichnet durch
- ein oder mehrere Bedien- bzw. Informationsmodul(e) (16),
wobei zwischen den Behältermodulen (10) und den Isolationsmodulen (12) und/oder an den Verbindungsstellen zwischen den einzelnen Isolationsmodulen (12) Dichtlippen (28) vorgesehen sind, welche mit einem höheren Luftanteil als die Isolationsmodule (12) geschäumt sind.

2. Speicher nach Anspruch 1, dadurch gekennzeichnet, daß zusätzlich ein Boden- bzw. Standmodul (18) und/oder ein Abdeckmodul (20) aus einem Isoliermaterial vorgesehen ist.

3. Speicher nach Anspruch 1 oder 2, dadurch gekennzeichnet, daß das Bedienmodul von einem weiteren Isolationsmodul umgeben ist.

4. Speicher nach einem der vorstehenden Ansprüche, dadurch gekennzeichnet, daß ein Anschlußmodul (24) für den Anschluß an den Heizkreislauf vorgesehen ist.

5. Speicher nach einem der vorstehenden Ansprüche, dadurch gekennzeichnet, daß die Behältermodule (10) über Verbindungen, wie beispielsweise dichtende Schraubund/oder Steckverbindungen, lösbar miteinander verbindbar.

6. Speicher nach einem der vorstehenden Ansprüche, dadurch gekennzeichnet, daß das Behältermodul (10) aus emaillierten Stahlblech gefertigt ist.

7. Speicher nach einem der vorstehenden Ansprüche, dadurch gekennzeichnet, daß das Behältermodul (10) mit einer Korrosionsschutzvorrichtung, insbesondere einer Magnesium- und/oder Fremdstromanode, versehen ist.

8. Speicher nach einem der vorstehenden Ansprüche, dadurch gekennzeichnet, daß das Behältermodul (10) kugel-, zylinder- oder quaderförmig ausgebildet ist und das Isolationsmodul (12) samt Verkleidung der Formgebung des Behältermoduls (10) und den räumlichen Verhältnissen entsprechend angepaßt ist, derart, daß der Speicher einen polygonalen- und/oder gekrümmten Grundriß aufweist.

9. Speicher nach Anspruch 8, gekennzeichnet durch mehrere aufeinander gestapelte zylinderförmige Behältermodule (10), denen jeweils ein Isolationsmodul (12) einschließlich Verkleidung mit viertel- oder halbkreisförmigem Querschnitt zugeordnet ist.

10. Speicher nach einem der vorstehenden Ansprüche, dadurch gekennzeichnet, daß das Isolationsmodul (12) aus - der Form des zugehörigen Behältermoduls (10) angepaßten - mehrteiligen Isolationsschalen aufgebaut ist.

11. Speicher nach Anspruch 10, dadurch gekennzeichnet, daß die Isolationsschalen aus extrudiertem Polystyrol (EPS) gefertigt sind.

12. Speicher nach einem der vorstehenden Ansprüche, dadurch gekennzeichnet, daß die Verkleidung als selbstständiges, vom Isolationsmodul lösbares Verkleidungsmodul (24) ausgebildet ist.

13. Speicher nach Anspruch 12, dadurch gekennzeichnet, daß die Verkleidungsmodule (24) über Schnapp- und/oder Steckverbindungen miteinander verbindbar sind.

14. Speicher nach Anspruch 12 oder 13, dadurch gekennzeichnet, daß das Verkleidungsmodul (24) dünnwandig und flexibel ist, derart, daß dieses auf das zugeordnete Isolationsmodul aufschiebbar ist.

15. Speicher nach einem der Ansprüche 12 bis 14, dadurch gekennzeichnet, daß das Verkleidungsmodul (24) aus Aluminiumblech oder Kunststoff, insbesondere aus Polypropylen, gefertigt ist.

16. Speicher nach einem der vorstehenden Ansprüche, dadurch gekennzeichnet, daß ein einziges Bedienmodul (16) für das Betreiben und Erfassen von mehreren Behältermodulen (10) vorgesehen ist.

17. Speicher nach Anspruch 16, dadurch gekennzeichnet, daß das Bedienmodul (16) mit einer Temperaturanzeige, einem Thermostat, einer Zeitschaltung, einer Fremdstromanodenvorrichtung und/oder eine Elektroheizung ausgestattet ist.

## Claims

1. An accumulator modular unit for assembly together with insulation and shell for a heating circuit, having the following modules:
- several tank modules (10),
- several insulation modules (12), which at least partially surround each of the tank modules (10), together with shell,
**characterised by**
- one or more control or information module(s) (16),
wherein provided between the tank modules (10) and the insulation modules (12) and/or at the connection points between the individual insulation modules (12) are sealing lips (28), which are expanded with a higher air content than the insulation module.

2. An accumulator according to Claim 1,
**characterised in that** additionally a base or floor-mounted module (18) and/or a covering module (20) made from an insulating material is provided.

3. An accumulator according to Claim 1 or 2,
**characterised in that** the control module is surrounded by a further insulation module.

4. An accumulator according to one of the preceding Claims,
**characterised in that** a connection module (24) for connection to the heating circuit is provided.

5. An accumulator according to one of the preceding Claims,
**characterised in that** the tank modules (10) (can be) detachably connected to one another via connections, such as, for example, screw and/or plug-in connections having a sealing action.

6. An accumulator according to one of the preceding Claims,
**characterised in that** the tank module (10) is manufactured from glassed steel plate.

7. An accumulator according to one of the preceding Claims,
**characterised in that** the tank module (10) is provided with a corrosion-protection device, in particular a magnesium and/or external current anode.

8. An accumulator according to one of the preceding Claims,
**characterised in that** the tank module (10) has a spherical, cylindrical, or rectangular-solid-shaped construction and the insulation module (12) together with the shell is adapted to the shaping of the tank module (10) and the spatial conditions in such a manner that the accumulator has a polygonal and/or curved horizontal projection.

9. An accumulator according to Claim 8,
**characterised by** several cylindrical tank modules (10) stacked on one top of the other, with each of which an insulation module (12) including shell having a cross section shaped as a quarter-circle or a half-circle is associated.

10. An accumulator according to one of the preceding Claims,
**characterised in that** the insulation module (12) is assembled from multi-part insulation shells which are adapted to the shape of the associated tank module (10).

11. An accumulator according to Claim 10,
**characterised in that** the insulation shells are manufactured from extruded polystyrol (EPS).

12. An accumulator according to one of the preceding Claims,
**characterised in that** the shell is constructed as an independent shell module (24) which can be detached from the insulation module.

13. An accumulator according to Claim 12,
**characterised in that** the shell modules (24) can be connected to one another via snap-on and/or plug-in connections.

14. An accumulator according to Claim 12 or 13,
**characterised in that** the shell module (24) has thin walls and is flexible so that it can be pushed onto the associated insulation module.

15. An accumulator according to one of Claims 12 to 14,
**characterised in that** the shell module (24) is manufactured from aluminium sheet or synthetic material, in particular polypropylene.

16. An accumulator according to one to the preceding Claims,
**characterised in that** a single control module (16) is provided for the operation and determination of several tank modules (10).

17. An accumulator according to Claim 16,
**characterised in that** the control module (16) is equipped with a temperature display, a thermostat, a time circuit, an external current anode device and/or electric heating.

## Revendications

1. Ensemble de construction d'accumulateur par éléments, pour l'assemblage, avec l'isolation et l'habillage, pour un circuit de chauffage, comprenant les modules suivants :
- plusieurs modules de cuve (10),
- plusieurs modules d'isolation (12), avec habillage, qui enveloppent les modules de cuve (10) chacun au moins partiellement,
caractérisé par
- un ou plusieurs modules de service ou d'information (16),
et dans lequel il est prévu, entre les modules de cuve (10) et les modules d'isolation (12) et/ou dans les zones d'assemblage entre les modules d'isolation élémentaires (12), des lèvres d'étanchéité (18) qui sont transformées en mousse contenant une plus grande proportion d'air que les modules d'isolation (12).

2. Accumulateur selon la revendication 1, caractérisé en ce qu'il est prévu en supplément un module de fond ou de socle (18) et/ou un module de fermeture (20) faits d'une matière isolante.

3. Accumulateur selon la revendication 1 ou 2, caractérisé en ce que le module de service est enveloppé d'un module d'isolation supplémentaire.

4. Accumulateur selon une des revendications précédents, caractérisé en ce qu'il est prévu un module de raccordement (28) pour le raccordement au circuit de chauffage.

5. Accumulateur selon une des revendications précédentes, caractérisé en ce que les modules de cuve (10) peuvent être raccordés les uns aux autres de façon séparable au moyen d'assemblages, comme, par exemple des assemblages à vis et/ou à emboîtement, établissant l'étanchéité.

6. Accumulateur selon une des revendications précédentes, caractérisé en ce que le module de cuve (10) est fabriqué en tôle d'acier émaillée.

7. Accumulateur selon une des revendications précédentes, caractérisé en ce que le module de cuve (10) est muni d'un dispositif de protection contre la corrosion, en particulier d'une anode de magnésium et/ou pour courants vagabonds.

8. Accumulateur selon une des revendications précédentes, caractérisé en ce que le module de cuve (10) est de configuration sphérique, cylindrique ou parallélépipédique, et le module d'isolation (12), avec l'habillage, est adapté à la conformation du module de cuve (10) et aux conditions d'espace de telle manière que l'accumulateur présente un profil au sol polygonal et/ou courbe.

9. Accumulateur selon la revendication 8, caractérisé par plusieurs modules de cuve cylindriques (10), empilés les uns sur les autres, à chacun desquels est associé un module d'isolation (12), avec un habillage de section transversale en quart de cercle ou en demi-cercle.

10. Accumulateur selon une des revendications précédentes, caractérisé en ce que le module d'isolation (12) est composé de coques d'isolation en plusieurs parties - adaptées à la forme du module de cuve (10) correspondant.

11. Accumulateur selon la revendication 10, caractérisé en ce que les cocues d'isolation sont fabriquées en polystyrène extrudé (EPS).

12. Accumulateur selon une des revendications précédentes, caractérisé en ce que l'habillage est réalisé sous la forme d'un module d'habillage indépendant (24), qui peut être détaché du module d'isolation.

13. Accumulateur selon la revendication 12, caractérisé en ce que les modules d'habillages (24) peuvent être assemblés entre eux par des assemblages à encliquetage et/ou à emboîtement.

14. Accumulateur selon la revendication 12 ou 13, caractérisé en ce que le module d'habillage (24) est à paroi mince et flexible, de sorte qu'il peut être emmanché sur le module d'isolation correspondant.

15. Accumulateur selon une des revendications 12 à 14, caractérisé en ce que le module d'habillage (24) est fabriqué en tôle d'aluminium et en matière plastique, en particulier en polypropylène.

16. Accumulateur selon une des revendications précédentes, caractérisé en ce qu'il est prévu un unique module de service (16) pour l'exploitation et la saisie de plusieurs modules de cuve (10).

17. Accumulateur selon la revendication 16, caractérisé en ce que le module de service (16) est équipé d'un afficheur de température, d'un thermostat, d'une horloge de commande à temps, d'un dispositif d'anode pour courants vagabonds et/ou d'un chauffage électrique.
